# EUROPEAN PATENT SPECIFICATION

(11) **EP 3 135 703 B1**
(45) Date of publication and mention of the grant of the patent: **16.10.2019**
(21) Application number: 15783216.3
(22) Date of filing: 21.04.2015
(51) Int. Cl.: C08G 18/81, G02B 1/04, G02C 7/02, C08G 18/24

(54) **POLYMERIZABLE COMPOSITION FOR OPTICAL MATERIAL, OPTICAL MATERIAL, AND METHOD FOR PRODUCING OPTICAL MATERIAL**
POLYMERISIERBARE ZUSAMMENSETZUNG FÜR EIN OPTISCHES MATERIAL, OPTISCHES MATERIAL UND VERFAHREN ZUR HERSTELLUNG DES OPTISCHEN MATERIALS
COMPOSITION POLYMÉRISABLE POUR MATÉRIAU OPTIQUE, ET MATÉRIAU OPTIQUE AINSI QUE PROCÉDÉ DE FABRICATION DE CELUI-CI

(30) Priority: 25.04.2014 JP 2014091260
(43) Date of publication of application: 01.03.2017
(73) Proprietor: Mitsui Chemicals, Inc., Tokyo 105-7117 (JP)
(72) Inventor: MURAKAMI, Masakazu, Omuta-shi Fukuoka 836-8610 (JP)
(74) Representative: Mewburn Ellis LLP
(86) International application number: PCT/JP2015/062080
(87) International publication number: WO 2015/163313

(56) References cited:
- WO-A1-00/73365
- WO-A1-01/36506
- DE-A1- 1 931 020
- DE-A1- 2 361 769
- JP-A- H07 118 263
- JP-A- H07 118 263
- JP-A- H10 298 260
- JP-A- 2003 514 933
- US-A- 3 966 794
- US-B1- 6 417 273

## Description

### TECHNICAL FIELD

The present invention relates to a polymerizable composition for optical materials, an optical material, and a process for producing an optical material.

### BACKGROUND ART

Since a plastic lens is lightweight, is difficult to crack, and can be dyed, compared to an inorganic lens, in recent years, it has spread rapidly in optical elements such as eyeglass lenses and camera lenses. Particularly, from the viewpoint of reducing the thickness of a lens, a plastic material having a high refractive index is desired, and, from the viewpoint of reducing chromatic aberration, a plastic material having a high Abbe number is desired. Among them, a plastic lens, which is made of a polythiourethane resin obtained by reacting a polythiol and a polyiso(thio)cyanate compound, has a high refractive index, and is excellent in impact resistance, dye-affinity, workability, and the like.

Patent Document 1 discloses a polymerizable composition for optical materials containing phenylene diisocyanate and a predetermined polythiol compound, and an ultrahigh refractive polythiourethane plastic lens having a refractive index of 1.7 or more, the lens being obtained from the composition.

Patent Document 2 discloses a polymerizable composition for optical materials containing episulfide (thioepoxide), and discloses an episulfide-based plastic lens having a refractive index of 1.7 or more, the lens being obtained from the composition.

Patent Document 3 discloses a polysulfide-based resin composition containing a polythiol having four or more functional groups and a compound having a reactive unsaturated bond and/or an epoxy group and/or an iso(thio)cyano group in a molecule, and discloses a polythioether-based transparent resin obtained from the composition.

Patent Document 4 discloses a curable liquid unsaturated thiol compound, a preparation method thereof, and a process for producing a solid polythioether product using the compound. It is described in Example 1 that a film is manufactured using pentaerythritol tetrakis(2-mercaptopropionate) and allyl isocyanate.

### RELATED DOCUMENT

### PATENT DOCUMENT

[Patent Document 1] WO2010-032365
[Patent Document 2] Japanese Unexamined Patent Publication No. H11-322930
[Patent Document 3] Japanese Unexamined Patent Publication No. H09-110983
[Patent Document 4] Japanese Unexamined Patent Publication No. S49-51333
[Patent Document 5] Japanese Unexamined Patent Publication No. H05-25240
[Patent Document 6] Japanese Unexamined Patent Publication No. H10-114825

JP H07118263 A discusses the use of oligomeric cyclic dithiols in the production of lenses. JP H07118263 A discloses a composition containing an isocyanate compound and the cyclic dithiol. The isocyanates in this case contains an ester linkage between the isocyanate group and the alkene. Such isocyanates are not isocyanates of in the present invention.

WO 01/36506A1 discusses polymerizable composition having monomers with at least two (meth)acryloly groups that may be useful in producing lenses. WO 01/36506A1 discloses a composition containing an isocyanate compound and a polythiol. The isocyanates in this case contains an ester linkage between the isocyanate group and the alkene. Such isocyanates are not isocyanates of in the present invention.

US 6 417 273 B1 discusses polymerizable compositions having a di(meth)acrylate compound, divinylbenzene and/or divinylbiphenyl, a crosslinking-type isocyanate compound, a polythiol compound having two or more thiol groups, and a thiourethane bonding accelerating compound. US 6 417 273 B1 specifically discloses a composition containing an isocyanate compound and an ethanedithiol. The isocyanates in this case contains a phenylene linker between the isocyanate group and the alkene group. Such isocyanates are not isocyanates of in the present invention.

US 3 966 794 A discloses compositions containing allyl isocyanate and a polythiol selected from pentaerythritol tetrakis (2-mercaptopropionate) and trimethylol propane tris (β-mercaptoproprionate). Such polythiols are not polythiols of the present invention.

### SUMMARY OF THE INVENTION

However, the plastic lens obtained from the polymerizable composition for optical materials, described in Patent Document 1, has a high refractive index, but has a low Abbe number and relatively large chromatic aberration. That is, there is room for improvement in the Abbe number. The plastic lens obtained from the polymerizable composition for optical materials, described in Patent Document 2, has a high refractive index and a high Abbe number, but has insufficient workability and strength in the two-point frame process of opening holes in both ends of an eyeglass lens and holding the eyeglass lens in a frame, and thus has room for improvement in workability and strength. Further, Patent Document 3 does not disclose a specific example in which a compound having a carbon-carbon double bond and at least one group selected from an isocyanate group and an isothiocyanate group, and a polythiol compound are combined. The refractive index of a thiourethane-based material containing polyisocyanate in the materials obtained from the polymerizable composition for optical materials is in a range 1.58 to 1.63, and thus there is room for improvement in the refractive index.

Patent Document 4 does not relate to an optical material, and, particularly, does not disclose any plastic lens.

The present invention has been made in view of such circumstances, and an object of the present invention is to provide a thiourethane optical material which has a high refractive index and a high Abbe number and which is excellent in the balance between these optical properties and is also excellent in strength.

The present invention is defined according to the present claims 1 to 7.

According to the polymerizable composition for optical materials of the present invention, it is possible to obtain an optical material which has a high refractive index and a high Abbe number and which is excellent in the balance between these optical properties and is also excellent in strength.

### DESCRIPTION OF EMBODIMENTS

The polymerizable composition for optical materials of the present invention will be described with reference to embodiments.

The polymerizable composition for optical materials of the present embodiment includes: (A) a compound having a carbon-carbon double bond and at least one group selected from an isocyanate group and an isothiocyanate group in a molecule; and (B) a polythiol polymer.

The present inventors found that, in such a configuration, particularly, when a compound (A) having a relatively small molecular weight and having a carbon-carbon double bond and at least one group selected from an isocyanate group and an isothiocyanate group in a molecule is used, an optical material having a high refractive index is obtained. Further, they found that, when a combination of a compound (A) and a polythiol compound (B) is used, an optical material having a high refractive index and a high Abbe number and having excellent strength is obtained. The present invention has been completed based on these findings.

Hereinafter, each component will be described.

### [Compound (A)]

A compound (A) used in the present embodiment has a carbon-carbon double bond and at least one group selected from an isocyanate group and an isothiocyanate group.

The compound (A) is represented by General Formula (1) below.

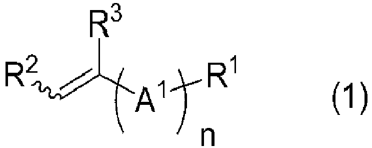

In Formula (1), A¹ represents an optionally substituted alkylene group of 1 to 4 carbon atoms.

As the substituent group of the optionally substituted alkylene group of 1 to 4 carbon atoms, a monomethyl group, a dimethyl group, or the like can be exemplified.

Preferably, A¹ is a methylene group, an ethylene group, a propylene group, or butylene group.

In Formula (1), n is an integer of 0 or 1.

In Formula (1), R¹ represents an isocyanate group or an isothiocyanate group, and is preferably an isocyanate group.

In Formula (1), R² is a hydrogen atom, an alkyl group of 1 to 4 carbon atoms or a group represented by the following formula.

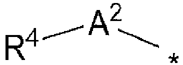

In the formula, A² and R⁴ have the same meaning as A¹ and R¹, respectively, and may be the same as or different from these groups. * represents a coupling hand.

R² in General Formula (1) is preferably a hydrogen atom, a methyl group, or an isocyanatomethylene group.

In Formula (1), R³ represents a hydrogen atom or a methyl group, and is preferably a hydrogen atom.

As the compound (A), preferably, a compound represented by General Formula (2) below can be used.

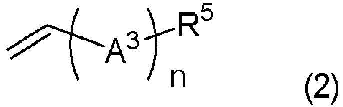

In Formula (2), A³ represents an optionally substituted alylene group of 1 to 4 carbon atoms.

As the substituent group of the optionally substituted alkylene group of 1 to 4 carbon atoms, a monomethyl group, a dimethyl group, or the like can be exemplified. Preferably, A³ is a methylene group, an ethylene group.

R⁵ represents an isocyanate group or an isothiocyanate group, and is preferably an isocyanate group.

n is an integer of 0 or 1.

Examples of the compound represented by General Formula (2) include allyl isocyanate, vinyl isocyanate, 2-methyl-2-propenyl isocyanate, 3-butenyl isocyanate, 2-butenyl isocyanate, vinyl phenylene isocyanate, allyl isothiocyanate, vinyl isothiocyanate, 2-methyl-2-propenyl isothiocyanate, 3-butenyl isothiocyanate, 2-butenyl isothiocyanate, and vinylphenylene isothiocyanate. At least one thereof can be used.

In the present embodiment, as the compound represented by General Formula (2), a compound, in which A³ is a methylene group or a phenylene group, R⁵ is an isocyanate group or an isothiocyanate group, and n is an integer of 0 or 1, is preferable, and specific examples thereof may be at least one selected from the group consisting of allyl isocyanate, allyl isothiocyanate, vinyl isocyanate, vinylphenylene isocyanate, and vinylphenylene isothiocyanate.

Among these, a compound, in which A³ is a methylene group, R⁵ is an isocyanate group or an isothiocyanate group, and n is an integer of 1, is particularly preferable, and specific examples thereof may include at least one selected from the group consisting of allyl isocyanate and allyl isothiocyanate.

It is possible to obtain an optical material, which has a higher refractive index and a higher Abbe numebr, is excellent in the balance between these optical properties, and has furhere improved tensile strength and the like, by combining the above-described compound, as the compound (A), with the polythiol compound (B).

### [Polythiol compound (B)]

The polythiol compound (B) is a di- or higher functional polythiol compound having one or more sulfide bonds and/or one or more ester bonds, and may be a mixture of one kind or two or more kinds of compounds.

The polythiol compound (B) is at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, and 3-mercaptomethyl-1,5-dimercapto-2,4-dithiapentane.

It is possible to obtain an optical material, which has a higher refractive index and a higher Abbe numebr, is excellent in the balance between these optical properties, and has furhere improved tensile strength and the like, by combining this polythiol compound (B) with the above-described polythiol compound (A).

### [Other components]

The polymerizable composition for optical materials according to the present embodiment can contain a reaction catalyst, a radical polymerization initiator, a polyisocyanate compound, an isocyanate compound having an isothiocyanate group or a polyisothiocyanate compound, a substitution product or modified product of an isocyanate compound, a thiol compound having a mercapto group or an amino group, a polyol compound, and a polyamine compound, in addition to the above-mentioned compound (A) and polythiol compound (B).

Examples of the reaction catalyst may include: tin compounds, such as dibutyltin dilaurate, dibutyltin dichloride, and, dimethyltin dichloride; and amine compounds such as tertiary amines. These compound can be used alone or in a combination of two or more thereof. A known urethane-forming catalyst or thiourethane-forming catalyst can also be used as the reaction catalyst.

The used amount of the reaction catalyst is not particularly limited, but is generally in a range of 0 parts by weight to 10 parts by weight based on 100 parts by weight of a polymerizable component.

The radical polymerization initiator is not particularly limited as long as it is responsive to an active energy ray such as heat or ultraviolet. In thermal polymerization, organic peroxides or azo compounds known in the related art can be used. Here, generally, compounds having a 10-hour half-life temperature of 120°C or lower are preferably used depending on heating conditions. Examples of these compounds can include cumyl peroxyneodecanoate, di-n-propyl peroxydicarbonate, di(2-ethylhexyl) peroxydicarbonate, t-butyl peroxyneodecanoate, 2,4-dichlorobenzoyl peroxide, lauroyl peroxide, acetyl peroxide, t- butyl peroxy-2-ethylhexanoate, benzoyl peroxide, t-butyl peroxyisobutyrate, t-butyl peroxylaurate, t-butyl peroxy-3,5,5-trimethylhexanoate, t-butyl peroxyisopropylcarbonate, t-butyl peroxyacetate, t-butyl peroxybenzoate, methyl ethyl ketone peroxide, dicumyl peroxide, t-butyl cumyl peroxide, and the like. As the azo compounds, azobisisobutyronitrile, 2,2'-azobis(4-methoxy-2,4-dimethylvaleronitrile), and azobis(methylbutylnitrile) can be exemplified. These catalysts may be used alone or in a combination of two or more thereof.

The reaction catalyst and the radical polymerization initiator may be used alone or in a combination thereof.

Examples of the polyisocyanate compound may include: aliphatic polyisocyanate compounds, such as hexamethylene diisocyanate, 2,2,4-trimethylhexane diisocyanate, 2,4,4-trimethylhexamethylene diisocyanate, lysine diisocyanatomethyl ester, lysine triisocyanate, m-xylylene diisocyanate, α,α,α',α'-tetramethylxylylene diisocyanate, bis(isocyanatomethyl)naphthalene, mesitylylene triisocyanate, bis(isocyanatomethyl) sulfide, bis(isocyanatoethyl) sulfide, bis(isocyanatomethyl) disulfide, bis(isocyanatoethyl) disulfide, bis(isocyanatomethylthio)methane, bis(isocyanatoethylthio)methane, bis(isocyanatoethylthio)ethane, and bis(isocyanatomethylthio)ethane; alicyclic polyisocyanate compounds, such as isophorone diisocyanate, bis(isocyanatomethyl)cyclohexane, dicyclohexylmethane diisocyanate, cyclohexane diisocyanate, methylcyclohexane diisocyanate, dicyclohexyldimethylmethane isocyanate, 2,5-bis(isocyanatomethyl)bicyclo-[2.2.1]-heptane, 2,6-bis(isocyanatomethyl)bicyclo-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane, and 4,9-bis(isocyanatomethyl)tricyclodecane; aromatic polyisocyanate compounds, such as diphenyl sulfide-4,4-diisocyanate; and heterocyclic polyisocyanate compounds, such as 2,5-diisocyanatothiophene, 2,5-bis(isocyanatomethyl)thiophene, 2,5-diisocyanatotetrahydrothiophene, 2,5-bis(isocyanatomethyl) tetrahydrothiophene, 3,4-bis(isocyanatomethyl) tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane.

As the isocyanate compound having an isothiocyanate group, there can be exemplified an isocyanate compound in which some of isocyanate groups of the above-exemplified polyisocyanate compound are changed to isothiocyanate groups.

Examples of the polyisothiocyanate compound may include: aliphatic polyisothiocyanate compounds, such as hexamethylene diisothiocyanate, lysine diisothiocyanatomethyl ester, lysine triisothiocyanate, m-xylene diisothiocyanate, bis(isothiocyanatomethyl) sulfide, bis(isothiocyanatoethyl) sulfide, and bis(isothiocyanatoethyl) disulfide; alicyclic polyisothiocyanate compounds, such as isophorone diisothiocyanate, bis(isothiocyanatomethyl)cyclohexane, dicyclohexylmethane diisothiocyanate, cyclohexane diisothiocyanate, methylcyclohexane diisothiocyanate, 2,5-bis(isothiocyanatomethyl)bicyclo-[2.2.1]-heptane, 2,6-bis(isothiocyanatomethyl)bicyclo-[2.2.1]-heptane, 3,8-bis(isothiocyanatomethyl)tricyclodecane, 3,9-bis(isothiocyanatomethyl)tricyclodecane, 4,8-bis(isothiocyanatomethyl)tricyclodecane, and 4,9-bis(isothiocyanatomethyl)tricyclodecane; aromatic polyisothiocyanate compounds, such as diphenyldisulfide-4,4-diisothiocyanate; and sulfur-containing heterocyclic polyisothiocyanate compounds, such as 2,5-diisothiocyanatothiophene, 2,5-bis(isothiocyanatomethyl)thiophene, 2,5-diisothiocyanatotetrahydrothiophene, 2,5-bis(isothiocyanatomethyl)tetrahydrothiophene, 3,4-bis(isothiocyanatomethyl)tetrahydrothiophene, 2,5-diisothiocyanato-1,4-dithiane, 2,5-bis(isothiocyanatomethyl)-1,4-dithiane, 4,5-diisothiocyanato-1,3-dithiolane, and 4,5-bis(isothiocyanatomethyl)-1,3-dithiolane.

Further, halogen substitution products such as chlorine substitution products and bromine substitution products, alkyl substitution products, alkoxy substitution products, and nitro substitution products of these isocyanate compounds; prepolymer modified products, carbodiimide modified products, urea modified products, and biuret modified products thereof with polyhydric alcohols; or dimerization or trimerization reaction products thereof can also be used.

Examples of the thiol compound having a hydroxy group may include 2-mercaptoethanol, 3-mercapto-1,2-propanediol, glycerin bis(mercaptoacetate), 4-mercaptophenol, 2,3-dimercapto-1-propanol, pentaerythritol tris(3-mercaptopropionate), and pentaerythritol tris(thioglycolate) .

Examples of the thiol compound having an amino group may include aminoethanethiol and the like.

Meanwhile, the polymerizable composition for optical materials according to the present embodiment, if necessary, in the same manner as that in the known molding method, may further include an ultraviolet absorber such as benzotriazole, an internal release agent such as an acidic phosphoric acid ester, a light stabilizer, an antioxidant, a chain extender, a crosslinker, an anticolorant, an oil-soluble dye, or a filler.

### <Process for producing optical material>

The optical material of the present embodiment can be produced by the following processes. Hereinafter, a process for producing an optical material in which the optical material is a plastic eyeglass lens will be described. Here, the process for producing an optical material according to the present embodiment includes a process for producing a polymerizable composition for optical materials as step (a) .
Step (a) : a compound (A) and a polythiol compound (B) are mixed to prepare a polymerizable composition for optical materials.
Step (b) : the polymerizable composition is injected into a mold for lens casting.
Step (c) : the polymerizable composition is polymerized and cured in the mold.

### [Step (a)]

In step (a), a compound (A) and a polythiol compound (B) are mixed, and, if necessary, are combined with various polymerizable compounds. In this case, a catalyst, and, if necessary, various additives are added to this mixture, followed by mixing and dissolving.

From the viewpoint of effects of the present invention, the compound (A) and the polythiol compound (B) can be used such that the functional group molar ratio represented by (NCO + NCS + number of double bonds) / (SH) is in a range of 0.5 to 2.0, and preferably 0.5 to 1.5, in the case where NCO is the number of moles of functional groups of all isocyanate groups in the polymerizable composition containing the compound (A), NCS is the number of moles of functional groups of all isothiocyanate groups in the polymerizable composition containing the compound (A), and SH is the number of moles of functional groups of all mercapto groups in the entire polythiol compound containing the compound (B).

When it is within the above range, it is possible to prevent the polymerizable composition from becoming rubbery or to prevent the color of the polymerizable composition from becoming poor during curing, and thus it is possible to obtain a molded product suitable for applications of optical materials.

The temperature in the mixing process is appropriately set, but, from the viewpoint of pot life of the polymerizable composition, there is a case in which the mixing process is preferred to be performed at lower temperature. When additives such as a catalyst and a release agent do not exhibit good solubility with respect to the compound (A) and the polythiol compound (B), and other polymerizable compounds, there is also a case in which these additives are previously warmed, and then dissolved in the compound (A) and the polythiol compound (B) or a mixture thereof.

The mixing order or mixing method of components in the composition is not particularly limited as long as the components can be uniformly mixed, and can be carried out by a known method. As the known method, for example, there is a method of preparing a master batch containing a predetermined amount of additives and then dispersing and dissolving this master batch in a solvent.

In addition, a compound obtained by reacting the compound (A) and a part of the polythiol compound (B) may be used.

### [Step (b)]

In step (b), the polymerizable composition for optical materials, obtained in step (a), is injected into a mold for lens casting, held by a gasket or tape.

Depending on the properties required for the plastic eyeglass lens which will be obtained, it is preferable that, if necessary, degassing treatment under reduced pressure or filtration treatment under pressure or reduced pressure is previously performed.

### [Step (c)]

In step (c), after the composition is injected, a mold for lens casting is heated in heatable equipment such as an oven or in water over a period of several hours to several tens of hours using a predetermined temperature program to cure and mold the composition.

The temperature of polymerization and curing is not limited because conditions change according to the combination ratio of the polymerizable composition, the kind of catalyst or the shape of a mold, but the polymerization and curing of the polymerizable composition is performed over 1 hour to 100 hours at about -50°C to 200°C. Generally, the polymerization and curing thereof starts at a temperature ranging from 5°C to 40°C, and then the temperature is gradually raised to a range of 80°C to 130°C to cure the polymerizable composition.

After the curing and molding, the plastic eyeglass lens according to the present embodiment can be obtained by taking out the resulting cured and molded product from the mold for lens casting. In order to alleviate the distortion due to polymerization, the plastic eyeglass lens according to the present embodiment is desired to be annealed by heating the released lens. Annealing temperature is generally 80°C to 150°C, preferably 100°C to 130°C, and more preferably 110°C to 130°C. Annealing time is generally 0.5 hours to 5 hours, and preferably 1 hour to 4 hours.

The plastic eyeglass lens according to the present embodiment, if necessary, may be provided on one side or both sides thereof with a coating layer, and then used. Examples of the coating layer include a primer layer, a hard coat layer, an anti-reflective film layer, an anti-fogging coating layer, an anti-contamination layer, and a water-repellent layer. These coating layers may be used alone, and may also be used in the form of a multi-layer of a plurality of coating layers. When applying coating layers on both sides of the plastic eyeglass lens, identical coating layers may be applied on the respective sides, and different coating layers may also be applied on the respective sides.

In each of these coating layers, an ultraviolet absorber for protecting lenses and eyes from ultraviolet rays, an infrared absorber for protecting eyes from infrared rays, a light stabilizer or antioxidant for improving the weather resistance of a lens, a dye or pigment, particularly, a photochromic dye or photochromic pigment for enhancing the fashionability of a lens, an antistatic agent, and other known additives for improving the performance of a lens may be used in a combination thereof. Various leveling agents may also be used for the purpose of improvement of coatability.

Further, the plastic eyeglass lens according to the present embodiment, if necessary, may be subjected to back side polishing, antistatic treatment, dyeing treatment, dimming treatment, or the like.

The plastic eyeglass lens according to the present embodiment, obtained in this way, has a high refractive index, and the e-line refractive index thereof is in a range of 1.6 to 1.8.

Heretofore, an example in which the optical material of the present invention is used as a plastic eyeglass lens has been described, but, for example, this optical material can be used as: various plastic lenses, such as an eyeglass lens for vision correction, a lens for imaging equipment, a Fresnel lens for liquid crystal projectors, a lenticular lens, and a contact lens; sealing materials for light-emitting diodes (LEDs); optical waveguides; optical adhesives used for bonding in optical lenses or optical waveguides; anti-reflective films used for optical lenses; and transparent coatings or transparent substrates used in liquid crystal display members (substrate, light guide plate, film, sheet, and the like).

### [Examples]

Hereinafter, the present invention will be described in more detail with reference to Preparation Examples and Examples, but the present invention is not limited to these Examples.

The lens obtained by polymerization was evaluated by performance tests. In the performance tests, refractive index·Abbe number, and specific gravity were evaluated by the following test method.
- Refractive index (ne) and Abbe number (*ν*e) were measured using Pulfrich refractometer KPR-30, manufactured by Shimadzu Corporation, at 20°C.
- Specific gravity was measured by an Archimedes method at 20°C.
- Bending test: bending strength was measured by AUTOGRAPH AGS-J manufactured by Shimadzu Corporation. The maximum point stress (N/mm²) was measured when a load was applied to the center of a resin test piece having a thickness of 3.0 mm, a length of 75 mm and a width of 25.0 mm at a descending speed of 1.2 mm/min.
- Tensile strength test: a resin flat plate prepared to have a lens diameter of 45 mm and a thickness of 2.5 mm was drilled by assuming a two-point frame processing to form holes having a diameter of 1.6 mm at two places of both ends of the resin flat plate. Subsequently, a metal shaft having a diameter of 1. 6 mm passed through the holes to attach both ends of a sample to a fixing jig, and then the sample was stretched at a speed of 5 mm/s, and the test force of the maximum point was measured using AUTOGRAPH AGS-J manufactured by Shimadzu Corporation. The value (kgf/mm) of the obtained maximum point test force divided by the thickness of the resin flat plate was calculated.

### [Preparation Example 1]

Polythiol A containing 1, 1, 3, 3-tetrakis (mercaptomethylthio) propane as a main component was synthesized in accordance with the method described in Preparation Example 2 of Japanese Unexamined Patent Publication No. 2004-2820.

164.2 g (1 mol) of 1, 1, 3, 3-tetra-methoxypropane, 488.8 g (4 mol) of acetylthiomethyl thiol, and 7.6 g (0.04 mol) of para-toluenesulfonic acid were put into a 2L bottom cock-equipped flask provided with a stirring blade, a thermometer, a distillation column and a capillary for nitrogen introduction, and heated to 40°C while maintaining a degree of vacuum of 1 kPa or less with stirring. Heating was continued for about 18 hours until distillation of methanol stopped. After cooling, the vacuum was released, a condenser was fitted instead of the distillation column, and then 400 ml of methanol, 400 ml of chloroform and 200 ml of 36% hydrochloric acid were added thereto and heated to 60°C to perform alcoholysis, thereby synthesizing polythiol A (target compound) containing 1,1,3,3-tetrakis(mercaptomethylthio)propane as a main component.

Appropriate amounts of water and chloroform were added to perform liquid separation, and a chloroform layer was washed with water several times. Chloroform and low-boiling fractions were removed by desolvation, and then filtration was performed with a 3 µm Teflon (registered trade mark) filter to obtain 340 . 0 g of polythiol A. By LC analysis of polythiol A, two other polythiol compound components were detected (9.8% and 9.8% at a chromatogram area ratio, respectively). When these components were purified by separating LC and analyzed, they were 4,6-bis(mercaptomethylthio)-1,3-dithiane and 2-(2,2-bis(mercaptomethylthio)ethyl)-1,3-dithiethane, respectively. The analysis results thereof are shown below.

Further, the thiol equivalent of polythiol A was measured by the following method. 0.05 mol of an iodine solution was slowly dropped into a mixed solvent solution of 95.1 mg of polythiol A, 30 ml of chloroform and 30 ml of methanol. When the brown color of the dropped iodine no longer disappeared at the time of dropping 9.7 ml of the iodine solution, the amount of SH groups contained in polythiol A was calculated by setting this point as an equivalent point, and, as a result, the amount thereof was 9.64 meq/g.
i) 1,1,3,3-tetrakis(mercaptomethylthio)propane
   ¹H-NMR δ (CDCl₃) : 2.18 (t, 4H), 2.49 (t, 2H), 3.78-3.90 (m, 8H), 4.64 (t, 2H)
   ¹³C-NMR δ (CDCl₃) : 26.7, 41.3, 48.7
   FT-IR: 538 cm⁻¹
   MS: m/z = 356 (M⁺)
ii) 4,6-bis(mercaptomethylthio)-1,3-dithiane
   ¹H-NMR δ (CDCl₃) : 2.02 (t, 2H), 2.56 (t, 2H), 3.77-3.91 (m, 8H), 3.97 (S, 2H), 4.66 (t, 2H)
   ¹³C-NMR δ (CDCl₃) : 27.1, 28.8, 38.1, 44.6
   FT-IR: 2538 cm⁻¹
   MS: m/z = 276 (M⁺)
iii) 2-(2,2-bis(mercaptomethylthio)ethyl)-1,3-dithiethane
   ¹H-NMR δ (CDCl₃) : 2. 03 (t, 2H), 2.13-2.21 (m, 1H), 2.75-2.80 (m, 1H), 3.79-3.84 (m, 1H), 3.90-3.96 (m, 3H), 4.32-4.35 (m, 2H)
   ¹³C-NMR δ (CDCl₃) : 27.2, 32.3, 38.9, 46.2
   FT-IR: 2538 cm⁻¹
   MS: m/z = 276 (M⁺)

### [Example 1]

32 parts by weight of ally isocyanate (manufactured by Tokyo Chemical Industry Co., Ltd.) reprsented by compound No. 1-1, 68 parts by weight of the polythiol compound A synthesized by the method described in Preparation Example 1 (polythiol compound containing 1,1,3,3-tetrakis(mercaptomethylthio)propane as a main component), 150 ppm of dimethyl tin dichloride, 2500 ppm of "PERBUTYL (R)O", and 1500 ppm of a mixture of monobutyl phosphate and dibutyl phosphate (mixing ratio of 1:9) were mixed and dissolved at room temperature, filtered using a PTFE-made filter under reduced pressure, and then sufficiently degassed until foaming could not be recognized under a reduced pressure of 150 kPa to 200 kPa. Subsequently, the polymerizable composition was injected into a mold composed of a glass mold and a tape, and then put into a heating oven and gradually heated to 25°C to 120°C to perform polymerization for 22 hours.

The obtained molded product had good transparency, and had a good appearance without distortion.

The evaluation results thereof are shown in Table 1 below.

### [Examples 2 to 9]

Operations were performed in the same manner as in Example 1, except for changing the composition as shown in Table 1. The compositions and evaluation results are shown in Table 1 below. Further, the bening test and tensile strength test for the molded product obtained in Example 2 were carried out. The results thereof are shown in Table 2.

### [Comparative Example 1]

In a glass beaker, 100 ppm of dimethyl tin dichloride as a catalyst, 1500 ppm of Zelec-UN (trade name, manufactured by STEPAN Corporation: acidic phosphoric acid ester), 44 parts by weight of m-xylene diisocyanate, and 56 parts by weight of polythiol A containing 1,1,3,3-tetrakis(mercaptomethylthio)propane as a main component were charged, and then stirred and mixed at room temperature . The mixed compounds were subjected to degassing under reduced pressure. Subsequently, the polymerizable composition was injected into a mold composed of a glass mold and a tape, and then put into a heating oven and gradually heated to 25°C to 120°C to perform polymerization for 20 hours.

The obtained molded product had good transparency, and had good appearance without distortion, but the Abbe number thereof was 30. The evaluation results thereof are shown in Table 1 below.

### [Comparative Example 2]

In a glass beaker, 100 ppm of dimethyl tin dichloride as a catalyst, 1500 ppm of Zelec-UN (trade name, manufactured by Stepan Corporation: acidic phosphoric acid ester), 51 parts by weight of m-xylene diisocyanate, and 49 parts by weight of polythiol compound B containing 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane as main components were charged, and then stirred and mixed at room temperature. The mixed compounds were subjected to degassing under reduced pressure. Subsequently, the polymerizable composition was injected into a mold composed of a glass mold and a tape, and then put into a heating oven and gradually heated to 25°C to 120°C to perform polymerization for 20 hours.

The obtained molded product had good transparency, and had a good appearance without distortion, but the Abbe number thereof was 31. The evaluation results thereof are shown in Table 1 below.

### [Comparative Example 3]

43.5 parts by weight of m-phenylene diisocyanate, 56.5 parts by weight of the polythiol compound A synthesized by the method described in Preapartion Example 1, 200 ppm of dibutyl tin dichloride as a curing catalayst, 1200 ppm of an internal release agent (trade name: Zelec-UN (trade name, manufactured by Stepan Corporation)), and 500 ppm of an ultraviolet absorber (trade name: Viosorb-583, manufactured by KYODO CHEMICAL CO., LTD.) were mixed, and then heated and stirred at 60 °C for 10 minutes to obtain a homogeneous monomer mixed solution (the molar ratio of a mercapto group to an isocyanate group in the monomer mixture statisfies SH/NCO = 1.0). This momomer mixture was degassed under reduced pressure for 5 minutes, and then filtered by a 3 µm PTFE-made filter. The filtered monomer mixture was injected into a mold assembly composed of a glass mold and a tape, and then gradually heated from 50°C to 120°C over 20 hours to be polymerized. After the completion of the polymerization, the glass mold was separated to obtain a resin molded product. The obtained resin molded product was annealed at 120°C for 4 hours. The Abbe number thereof was 23. The evaluation results thereof are shown in Table 1 below.

### [Comparative Example 4]

90.9 parts by weight of bis(2,3-epithiopropyl) disulfide and 1 part by weight of an ultraviolet absorber (trade name: Tinuvin PS) were mixed and dissolved at 20 °C to obtain a homogenous solution. Then, 9.1 parts by weight of polythiol compound B containing 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane as main components was added to this solution, mixed and dissolved, and then filtered using a 3 µm PTFE-made filter. Subsequently, 910 ppm of dicyclohexylmethylamine and 190 ppm of dimethylcyclohexylamine were added to this solution, mixed and dissolved, and then injected into a mold assembly composed of a glass mold and a tape, and gradually heated from 30°C to 80°C over 21 hours to be polymerized. After the completion of the polymerization, the glass mold was released to obtain a molded product. The obtained molded product was annealed at 120°C for 3 hours. Data of drilling tension test and three-point bending test are shown in Table 2 below.

**Table 1**

| | Composition (parts by weight in parenthesis) | | | Evaluation items | | |
|---|---|---|---|---|---|---|
| | Isocyanate compound | Thiol compound 1 | Molar ratio* of functional group | Optical properties | | |
| | | | | Refractive index | Abbe number | Specific gravity d |
| Example 1 | No.1-1(32) | A(68) | 1.2 | 1.688 | 34 | 1.40 |
| Example 2 | No.1-1(29) | A(71) | 1.0 | 1.698 | 34 | 1.41 |
| Example 3 | No.1-1(25) | A(75) | 0.8 | 1.698 | 34 | 1.41 |
| Example 4 | No.1-1(22) | A(78) | 0.7 | 1.699 | 33 | 1.42 |
| Example 5 | No.1-1(40) | A(60) | 1.6 | 1.674 | 34 | 1.39 |
| Example 6 | No.1-1(45) | A(55) | 2.0 | 1.658 | 34 | 1.38 |
| Example 7 | No.1-1(31) | B(69) | 1.0 | 1.649 | 38 | 1.32 |
| Example 8 | No.1-1(33) | C(67) | 1.0 | 1.636 | 37 | 1.29 |
| Example 9 | No.1-2(33) | A(67) | 1.2 | 1.738 | 26 | 1.39 |
| Comparative Example 1 | Compound(a) (44) | A(56) | 0.9 | 1.695 | 30 | 1.43 |
| Comparative Example 2 | Compound(a) (51) | B(49) | 1.0 | 1.668 | 31 | 1.37 |
| Comparative Example 3 | Compound(b) (43.5) | A(56.5) | 1.0 | 1.739 | 23 | - |

| | | | | | | |
|---|---|---|---|---|---|---|
| *: (number of moles of isocyanate groups included in polymerizable composition + number of moles of isothiocyanate groups included in polymerizable composition + number of double bonds) / number of moles of thiol groups included in polymerizable composition | | | | | | |

**Table 2**

| | Composition (parts by weight in parenthesis) | | | Evaluation items | | | |
|---|---|---|---|---|---|---|---|
| | Monomer | Thiol compound | Molar ratio* of functional group | Optical properties | | Three-point bending test | Tensile strength test |
| | | | | Refractive index | Abbe number | Stress at maximum point [N/mm²] | Test force / thickness [kgf/mm] |
| Example 2 | No.1-1(29) | A(71) | 1.0 | 1.698 | 34 | 120 | 26.5 |
| Comparative Example 4 | E-1(90.9) | B(9.1) | - | 1.737 | 32 | 121 | 16.6 |

| | | | | | | | |
|---|---|---|---|---|---|---|---|
| *: (number of moles of isocyanate groups included in polymerizable composition + number of moles of isothiocyanate groups included in polymerizable composition + number of double bonds) / number of moles of thiol groups included in polymerizable composition | | | | | | | |

Compounds decribed in Table 1 and Table 2 are as follows.
Compound (a): m-xylene diisocyanate
Compound (b): m-phenylene diisocyanate
No. 1-1: allyl isocyanate
No. 1-2: allyl isothiocyanate
E-1: bis(2,3-epithiopropyl) disulfide
A: polythiol compound containing 1,1,3,3-tetrakis(mercaptomethylthio)propane as main component
B: polythiol compound containing 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane as main components
C: 4-mercaptomethyl-1,8-dimercapto-3,6-dithiaoctane

Comparing Examples 1 to 6 with Comparative Example 1, and comparing Example 7 with Comparative Example 2, in Examples including "compound (A) having a carbon-carbon double bond and at least one group selected from an isocyanate group and an isothiocyanate group in a molecule", molded products have a high Abbe number while exhibiting the same degree of a high refractive index were obtained. Further, as in Example 8, even with different thiol compounds, similar results.

Further, comparing Example 9 with Comparative Example 3, a molded product of Example 9 has higher Abbe number than that of Comparative Example 3 while exhibiting the same degree of a high refractive index. Further, from the results of Example 2 and Comparative Example 4, it was found that the molded product obtained in the present invention is a molded product which is excellent even in terms of tensile strength or the like.

As described above, it was possible to obtain a thiourethane optical material, which is excellent in strength or the like, has a high refractive index and a high Abbe number and is excellent in the balance between these optical properties, from the polymerizable composition for optical materials containing: the compound (A) having a carbon-carbon double bond and at least one group selected from an isocyanate group and an isothiocyanate group in a molecule; and the polythiol compound (B).

This application claims the benefit of Japanese Patent Application No. 2014-091260, filed April 25, 2014.

## Claims

1. A polymerizable composition for optical materials, comprising:
(A) a compound represented by following General Formula (1); and
(B) a polythiol compound 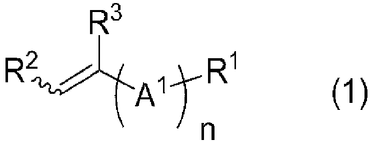 wherein, in Formula (1),
A¹ represents an optionally substituted alkylene group of 1 to 4 carbon atoms;
n is an integer of 0 or 1;
R¹ represents an isocyanate group or an isothiocyanate group;
R² represents a hydrogen atom, an alkyl group of 1 to 4 carbon atoms or a group represented by the following formula: 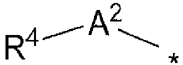
wherein, in the formula, A² and R⁴ have the same meaning as A¹ and R¹, respectively, and may be the same as or different from these groups, * represents a coupling hand; and
R³ represents a hydrogen atom or a methyl group; and
wherein the polythiol compound (B) is at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, and 3-mercaptomethyl-1,5-dimercapto-2,4-dithiapentane.

2. The polymerizable composition for optical materials according to claim 1,
wherein the compound (A) is represented by following General Formula (2): 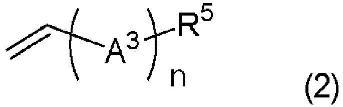 wherein, in Formula (2), A³ is an optionally substituted alkylene group of 1 to 4 carbon atoms, R⁵ represents an isocyanate group or an isothiocyanate group, and n is an integer of 0 or 1.

3. The polymerizable composition for optical materials according to claim 1 or claim 2,
wherein a functional group molar ratio represented by (number of moles of all isocyanate groups + number of moles of all isothiocyanate groups + number of double bonds) / (number of moles of all mercapto groups) in the polymerizable composition is 0.5 to 2.0.

4. A process for producing an optical material, comprising:
step of mixing the compound (A) with the polythiol compound (B) to prepare the polymerizable composition for optical materials according to any one of claims 1 to 3;
step of injecting the polymerizable composition into a casting mold; and
step of polymerizing and curing the polymerizable composition in the casting mold.

5. An optical material, which is obtained by the process according to claim 4.

6. The optical material according to claim 5,
wherein a refractive index of e-line is in a range of 1.6 to 1.8.

7. A plastic eyeglass lens, which is comprised of the optical material according to claim 5 or 6.

## Patentansprüche

1. Polymerisierbare Zusammensetzung für optische Materialien, die Folgendes umfasst:
(A) eine Verbindung, die durch die folgende allgemeine Formel (1) dargestellt ist; und
(B) eine Polythiolverbindung 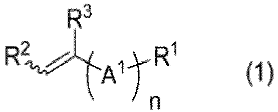 wobei in Formel (1)
A¹ für eine gegebenenfalls substituierte Alkylengruppe mit 1 bis 4 Kohlenstoffatomen steht;
n eine ganze Zahl von 0 oder 1 ist;
R¹ für eine Isocyanatgruppe oder eine Isothiocyanatgruppe steht;
R² für ein Wasserstoffatom, eine Alkylgruppe mit 1 bis 4 Kohlenstoffatomen oder eine Gruppe, die durch die folgende Formel dargestellt ist, steht: 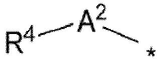
wobei in der Formel A² und R⁴ dieselbe Bedeutung haben wie A¹ bzw. R¹ und gleich wie oder unterschiedlich von diesen Gruppen sein können, * für einen Bindungsarm steht; und
R³ für ein Wasserstoffatom oder eine Methylgruppe steht; und
wobei die Polythiolverbindung (B) zumindest eine aus der aus 4-Mercaptomethyl-1,8-dimercapto-3,6-dithiaoctan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, 1,1,3,3-Tetrakis(mercaptomethylthio)propan, 4,6-Bis(mercaptomethylthio)-1,3-dithian, 2-(2,2-Bis(mercaptomethylthio)ethyl)-1,3-dithiethan, 1,1,2,2-Tetrakis-(mercaptomethylthio)ethan und 3-Mercaptomethyl-1,5-dimercapto-2,4-dithiapentan bestehenden Gruppe ausgewählte ist.

2. Polymerisierbare Zusammensetzung für optische Materialien nach Anspruch 1,
wobei die Verbindung (A) durch die folgende allgemeine Formel (2) dargestellt ist: 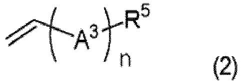 wobei in Formel (2) A³ eine gegebenenfalls substituierte Alkylengruppe mit 1 bis 4 Kohlenstoffatomen ist, R⁵ für eine Isocyanatgruppe oder eine Isothiocyanatgruppe steht und n eine ganze Zahl von 0 oder 1 ist.

3. Polymerisierbare Zusammensetzung für optische Materialien nach Anspruch 1 oder Anspruch 2,
wobei ein Molverhältnis der funktionellen Gruppe, das durch (Molanzahl aller Isocyanatgruppen + Molanzahl aller Isothiocyanatgruppen + Anzahl der Doppelbindungen) / (Molanzahl aller Mercaptogruppen) dargestellt ist, in der polymerisierbaren Zusammensetzung 0,5 bis 2,0 beträgt.

4. Verfahren zur Herstellung eines optischen Materials, das Folgendes umfasst:
einen Schritt des Mischens der Verbindung (A) mit der Polythiolverbindung (B), um eine polymerisierbare Zusammensetzung für optische Materialien nach einem der Ansprüche 1 bis 3 herzustellen;
einen Schritt des Injizierens der polymerisierbaren Zusammensetzung in eine Gussform; und
einen Schritt des Polymerisierens und Härtens der polymerisierbaren Zusammensetzung in der Gussform.

5. Optisches Material, das durch ein Verfahren nach Anspruch 4 erhalten wird.

6. Optisches Material nach Anspruch 5,
wobei ein Brechungsindex der e-Linie im Bereich von 1,6 bis 1,8 liegt.

7. Kunststoff-Brillenlinse, umfassend ein optisches Material nach Anspruch 5 oder 6.

## Revendications

1. Composition polymérisable pour matériaux optiques, comprenant :
(A) un composé représenté par la formule générale (1) qui suit; et
(B) un composé polythiol 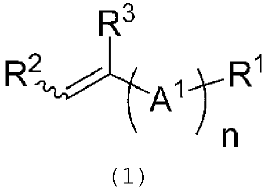 où, dans la formule (1),
A¹ représente un groupe alkylène éventuellement substitué de 1 à 4 atomes de carbone ;
n est l'entier 0 ou 1 ;
R¹ représente un groupe isocyanate ou un groupe isothiocyanate ;
R² représente un atome d'hydrogène, un groupe alkyle de 1 à 4 atomes de carbone ou un groupe représenté par la formule suivante : 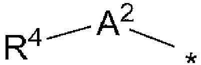
où, dans la formule, A² et R⁴ ont les mêmes significations que A¹ et R¹, respectivement, et peuvent être identiques à ces groupes ou différents de ceux-ci, * représente une main de couplage ; et
R³ représente un atome d'hydrogène ou un groupe méthyle ; et dans laquelle le composé polythiol (B) est au moins l'un choisi dans l'ensemble constitué par le 4-mercaptométhyl-1,8-dimercapto-3,6-dithiaoctane, le 5,7-dimercaptométhyl-1,11-dimercapto-3,6,9-trithiaundécane,
le 4,7-dimercaptométhyl-1,11-dimercapto-3,6,9-trithiaundécane,
le 4,8-dimercaptométhyl-1,11-dimercapto-3,6,9-trithiaundécane,
le 1,1,3,3-tétrakis(mercaptométhylthio)propane,
le 4,6-bis(mercaptométhylthio)-1,3-dithiane,
le 2-(2,2-bis(mercaptométhylthio)éthyl)-1,3-dithiéthane,
le 1,1,2,2-tétrakis(mercaptométhylthio)éthane, et
le 3-mercaptométhyl-1,5-dimercapto-2,4-dithiapentane.

2. Composition polymérisable pour matériaux optiques selon la revendication 1, dans laquelle le composé (A) est représenté par la formule générale (2) suivante : 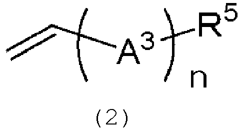 où, dans la formule (2), A³ est un groupe alkylène éventuellement substitué de 1 à 4 atomes de carbone, R⁵ représente un groupe isocyanate ou un groupe isothiocyanate, et n est l'entier 0 ou 1.

3. Composition polymérisable pour matériaux optiques selon la revendication 1 ou la revendication 2, dans lequel le rapport molaire des groupes fonctionnels, représenté par (nombre de moles de tous les groupes isocyanate + nombre de moles de tous les groupes isothiocyanate + nombre de doubles liaisons) / (nombre de moles de tous les groupes mercapto) dans la composition polymérisable est de 0,5 à 2,0.

4. Procédé pour produire un matériau optique, comprenant :
une étape de mélange du composé (A) avec le composé polythiol (B) pour préparer la composition polymérisable pour matériaux optiques selon l'une quelconque des revendications 1 à 3 ;
une étape d'injection de la composition polymérisable dans un moule de coulée ; et
une étape de polymérisation et de durcissement de la composition polymérisable dans le moule de coulée.

5. Matériau optique qui est obtenu par le procédé selon la revendication 4.

6. Matériau optique selon la revendication 5, dans lequel l'indice de réfraction de ligne e est situé dans la plage allant de 1,6 à 1,8.

7. Verre de lunette en matière plastique, qui est constitué du matériau optique selon la revendication 5 ou 6.
